# EUROPEAN PATENT APPLICATION

(11) **EP 1 418 376 A1**
(43) Date of publication of application: **12.05.2004**
(21) Application number: 01955605.9
(22) Date of filing: 08.08.2001
(51) Int. Cl.: F16L 15/04, F16L 13/12, B23K 1/14, B23K 1/18, B23K 1/19

(54) **METHOD AND STRUCTURE FOR CONNECTING DIFFICULT−TO−JOIN PIPES TO BE USED AT HIGH TEMPERATURE**

(71) Applicant: JGC Corporation, Tokyo 100-0004 (JP)
(72) Inventor: HOSOYA, Keizo, R&D Center, JGC Corporation, Higashiibaraki-gun, Ibaraki 311-1313 (JP); SHIRATORI, Nobuo, R&D Center, JGC Corporation, Higashiibaraki-gun, Ibaraki 311-1313 (JP); SATO, Kenji, R&D Center, JGC Corporation, Higashiibaraki-gun, Ibaraki 311-1313 (JP)
(74) Representative: DTS Zürich
(86) International application number: PCT/JP2001/006835
(87) International publication number: WO 2003/014612

(57) **Abstract**

Pipes (2, 3) made of a difficult-to-weld material to be used at a high temperature are internally (3a) and externally (2a) threaded at their end portions, an are thread-fastened to each other. The inner and/or outer faces of the jointed pipe portion (1) is sealed by seal means (7, 9), so that the pipes (2, 3) made of difficult-to-weld material to be used at a high temperature are joined by the screw structure, thereby to retain mechanical strength of the jointed pipe portion (1). At the same time, the inner and/or outer faces of the jointed pipe portion (1) is sealed by the seal means (7, 9) to retain the gas tightness of the jointed pipe portion (1).

## Description

### TECHNICAL FIELD

The present invention relates to a method for connection and connection structure of pipes composed of materials which are to be used under high-temperature conditions and are difficult to join, such as heating pipes or high-temperature process pipes used at a high temperature in petroleum refineries, petrochemical plants, power generation plants, steelmaking plants, nuclear power installations, LNG plants, aerospace industry and the like.

### BACKGROUND ART

In the equipment and facilities of the above-described plants, the materials of pipes used at a high temperature have, in many cases, excellent physical properties such as a high melting point and high strength at a high temperature. However, these materials are difficult to melt join (weld) when they are connected to each other or even if they are joined, a sufficient joint strength cannot be obtained when the pipes are used at a high temperature.

For this reason, joining methods were developed, such as soldering, solid phase/liquid phase diffusion joining, friction pressure welding, pulse current sintering and the like, by which the pipes made of materials that are difficult to weld were connected without melting the base material. However, those methods provided a low mechanical strength at a high temperature and were applicable to a limited number of materials and shapes. A large number of techniques are presently still at a laboratory level and have not yet reached the stage of joining the pipes of materials that are difficult to weld by those joining methods. Thus, from the standpoint of strength at a normal temperature and sealing ability, those joining methods can provide joints suitable for use at temperatures close to the normal temperature, but cannot provide joints suitable for desired use at a high temperature.

On the other hand, joining of pipes with screw structures has also been used for connection of pipes.

Such joining of pipes with screw structures has been used in practice for coupling oil pipes in oil drilling fields within a temperature range of -50°C through room temperature to 300°C. However, in a high-temperature environment in which the material demonstrates creep deformation, that is, in a creep region, the deformation of threads at a high temperature is large. For this reason, in terms of sealing ability and strength, such joining method has been considered unsuitable for high-temperature applications.

With the foregoing in view, it is an object of the present invention to provide method and structure for connecting difficult-to-join pipes to be used at a high temperature, those method and structure being suitable for connecting the pipes consisting of materials that have not been heretofore used for pipe connection because they were difficult to join.

### DISCLOSURE OF THE INVENTION

The method for connecting difficult-to-join pipes to be used at a high temperature in accordance with the present invention comprises the steps of: providing the external or internal thread on the end portions of pipes composed of materials which are difficult to weld and are to be used at a high temperature and thread-jointing the pipes to each other; and sealing the inner and outer faces, or only the inner face, or only the outer face of the thread-jointed pipe portion with seal means, whereby mechanical strength of the jointed pipe portion is ensured by providing pipes composed of materials, which are difficult to weld and are to be used at a high temperature, with the screw structure, and gas tightness of the jointed pipe portion is ensured by sealing the inner and outer faces, or only the inner face, or only the outer face of the jointed pipe portion with the seal means.

Furthermore, the structure for connecting difficult-to-join pipes to be used at a high temperature in accordance with the present invention comprises pipes composed of materials which are difficult to weld and are to be used at a high temperature that were provided with an external or internal thread on the end portions thereof; and seal means for sealing the inner and outer faces, or only the inner face, or only the outer face of the thread-jointed pipe portion, so that mechanical strength of the jointed pipe portion is ensured by mutually joining the pipes composed of materials, which are difficult to weld and are to be used at a high temperature, by means of the screw structure, and gas tightness of the jointed pipe portion is ensured by sealing the inner and outer faces, or only the inner face, or only the outer face of the jointed pipe portion with the seal means.

### BRIEF DESCRIPTION OF THE DRAWINGS

FIG. 1 is an expanded view of the main portion of the jointed pipe portion illustrating an embodiment of the method and structure for connecting difficult-to-join pipes to be used at a high temperature in accordance with the present invention; and
FIG. 2 is an expanded view of the main portion of the jointed pipe portion illustrating another embodiment.

### BEST MODE FOR CARRYING OUT THE INVENTION

Embodiment of the method and structure for connecting difficult-to-join pipes to be used at a high temperature in accordance with the present invention will be described below.

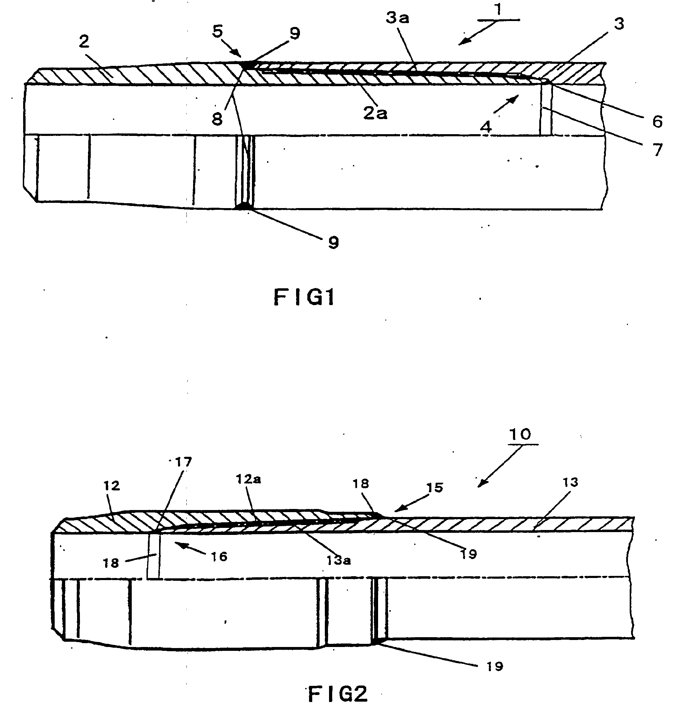

FIG. 1 is an expanded view of the main portion of a jointed pipe portion 1 illustrating the first embodiment of the pipe connection method and structure in accordance with the present invention. When a heated fluid such as naphtha or the like is passed inside the jointed pipe portion 1, the pipe wall temperature rises from room temperature to about 1100°C.

The jointed pipe portion 1 comprises a thick and short pipe 2 machined to form an external thread 2a at one end thereof and a pipe 3 machined to form an internal thread 3a at one end thereof The pipe 2 and pipe 3 threaded at one end thereof are thread-joined to each other to obtain the jointed pipe portion 1.

The above-described external thread 2a and internal thread 3a are taper threads conforming to API Specification Standard 5B.

As for the materials of pipes 2, 3, the material of thick pipe 2 machined to form the external thread 2a at one end thereof is a conventional Fe-Cr-Ni heat-resistant alloy, and the material of pipe 3 machined to form the internal thread 3a at one end thereof is an iron-based alloy reinforced with dispersed rare earth oxide particles, which is difficult to weld and has excellent high-temperature properties.

In the pipe connection method and structure in accordance with the present invention, in order to obtain the air-tight inner and outer face of the thread-jointed pipe portion 1, the joints 4, 5 of both pipes 2, 3 present on the inner and outer faces of the jointed pipe portion 1 are air-tight sealed with seal means.

An example of seal means is the seal welding process described in the embodiment. Specifically, a recess 6 of joint 4 formed along the circumferential direction on the inner peripheral face is welded with a first welding material 7 which is an alloy having a composition similar to the composition of pipe 3 but containing no oxides or a similar alloy used for welding of Fe-Ni-Cr heat-resistant alloys, and a recess 8 of joint 5 formed along the circumferential direction on the outer peripheral face is welded with a second welding material 9 which is an alloy having a composition similar to the composition of pipe 3 but containing no oxides or a similar alloy used for welding of Fe-Ni-Cr heat-resistant alloys.

The jointed pipe portion 1 of a pair of pipes 2, 3 connected by such connection method and structure were subjected to following strength tests (1) to (5). The strength of jointed pipe portion 1 was higher than the strength of pipe 2 or pipe 3 in all of the test. Furthermore, good results were also obtained with respect to sealing ability.
(1) High-temperature tensile test conducted at 1100°C.
(2) High-temperature creep test conducted at 1100°C.
(3) Normal-temperature burst test.
(4) Internal pressure creep test at 950°C.
(5) Thermal cycle test (25 cycles) in which 950°C and 200°C heating-cooling cycles are repeated.

Next, a second embodiment of the invention will be described in detail.

FIG. 2 is cross-sectional view of the main portion of a jointed pipe portion 10 illustrating the second embodiment of the pipe connection method and structure in accordance with the present invention. When a heated fluid such as naphtha or the like is passed inside the jointed pipe portion 10, in the same manner as in the first embodiment, the pipe wall temperature rises from room temperature to about 1100°C.

The jointed pipe portion 10 comprises a thick and short pipe 12 machined to form an internal thread 12a at one end thereof and a pipe 13 machined to form an external thread 13a at one end thereof The pipe 12 and pipe 13 threaded at one end thereof are thread-joined to each other to form the jointed pipe portion 10.

The above-described internal thread 12a and external thread 13a are taper threads conforming to API Specification Standard 5B, same as those of the first embodiment.

As for the materials of pipes 12, 13, the material of thick pipe 12 machined to form the internal thread 12a at one end thereof is a conventional Fe-Cr-Ni heat-resistant alloy, and the material of pipe 13 machined to form the external thread 13a at one end thereof is an iron-based alloy reinforced with dispersed rare earth oxide particles which is difficult to weld and has excellent high-temperature properties.

In the second embodiment, in order to obtain the air-tight inner and outer face of the thread-connected jointed pipe portion 10, the joints 15, 16 of both pipes 12, 13 present on the inner and outer faces of the jointed pipe portion 10 are air-tight sealed with seal means.

The seal means, same as in the above-described first embodiment, comprises the seal welding process. Specifically, a recess 17 of joint 16 formed along the circumferential direction on the inner peripheral face is welded with a first welding material 18 which is an alloy having a composition similar to the composition of pipe 13 but containing no oxides or a similar alloy used for welding of Fe-Ni-Cr heat-resistant alloys, and a recess 18 of joint 15 formed along the circumferential direction on the outer peripheral face is welded with a second welding material 9 which is an alloy having a composition similar to the composition of pipe 13 but containing no oxides or a similar alloy used for welding of Fe-Ni-Cr heat-resistant alloys.

The jointed pipe portion 10 of a pair of pipes 12, 13 connected by such connection method and structure were subjected to following strength tests (1) to (5) in a similar manner to the first embodiment. The strength of jointed pipe portion 10 was higher than the strength of pipe 12 or pipe 13 in all of the test. Furthermore, good results were also obtained with respect to sealing ability.
(1) High-temperature tensile test conducted at 1100°C.
(2) High-temperature creep test conducted at 1100°C.
(3) Normal-temperature burst test.
(4) Internal pressure creep test at 950°C.
(5) Thermal cycle test (25 cycles) in which 950°C and 200°C heating-cooling cycles are repeated.

The above-described connection method and structure were explained by considering the seal welding process as an example of seal means of jointed pipe portions 1, 10. The present invention is, however, not limited to the above-described embodiments, and soldering, solid phase/liquid phase diffusion joining, pulse current sintering, and metallic O ring/gasket or like means can also be used.

The seal means employed for providing gas tightness is not necessarily used on both the inner face and outer face of the jointed pipe portions 1, 10. It can be implemented only on the outer face or only on the inner face thereof according to the purpose (external pressure control, internal pressure control).

The above-described pipe connection method and structure in accordance with the present invention are summarized below.
(A) Materials for high temperature applications having excellent high-temperature properties are joined with a joint with screw structure.
(B) In the thread design, the cross-sectional area of the thinnest portion is determined by taking into account the strength of material so that the strength of the thinnest portion, which is the portion with the lowest mechanical strength, exceeds the strength of the base material pipes, thereby making the strength of the joint in the creep region higher than that of the base material.
(C) Materials that are difficult to weld but have excellent high-temperature properties, such as ceramics or alloys reinforced with dispersed oxides, are used as the pipe materials.
(D) Threads of parallel shape or taper shape are used by taking into account the strength and thickness of pipes.
(E) The threaded joint is made air tight by welding the joints on both pipes present on the inner face and outer face of the pipes or by another method such as soldering, solid phase/liquid phase diffusion joining, pulse current sintering and the like.
(F) When the design cannot be such that the strength of the thinnest portion of the thread exceeds the strength of the base material pipes as described above in (B), the thickness of the threaded portions of the pipe end portions is increased as necessary.

The method and structure for connecting difficult-to-join pipes to be used at a high temperature in accordance with the present invention make it possible to employ for connecting pipes the materials, primarily composite materials, that have not been used for pipe connection because they were difficult to join. As a result, the advantages of increased operation temperature, extended service life of pipes, and improved safety are brought about to process pipes to be used at a high temperature or heating pipes used under high temperature in petroleum refineries, petrochemical plants, power generation plants, steelmaking plants, nuclear power installations, LNG plants, aerospace industry and the like.

### INDUSTRIAL APPLICABILITY

As described above, the method and structure for connecting difficult-to-join pipes to be used at a high temperature in accordance with the present invention are suitable for petroleum refineries, petrochemical plants, power generation plants, steelmaking plants, nuclear power installations, LNG plants, and aerospace industry where the increase in operation temperature, extension of service life of pipes, and improvement of safety are necessary for process pipes employed at a high temperature or heating pipes.

## Claims

1. A method for connecting difficult-to-join pipes to be used at a high temperature, comprising:
a step of forming an external or internal thread on end portions of pipes to be used at a high temperature and composed of materials which are difficult to weld, and thread-jointing the pipes to each other; and
a step of sealing inner and outer faces, or only the inner face, or only the outer face of the thread-joined pipe portion with seal means,
whereby mechanical strength of the jointed pipe portion is ensured by providing pipes to be used at a high temperature, composed of materials which are difficult to weld with the mutually screw structure, and gas tightness of the jointed pipe portion is ensured by sealing the inner and outer faces, or only the inner face, or only the outer face of the jointed pipe portion with the seal means.

2. The method for connecting difficult-to-join pipes to be used at a high temperature according to claim 1, wherein the thread comprises a taper thread.

3. The method for connecting difficult-to-join pipes to be used at a high temperature according to claim 1, wherein the materials which are difficult to weld comprise iron-based alloys reinforced with dispersed rare earth oxide particles.

4. The method for connecting difficult-to-join pipes to be used at a high temperature according to claim 1, wherein the seal means comprises seal welding.

5. The method for connecting difficult-to-join pipes to be used at a high temperature according to claim 1, wherein the seal means comprises soldering.

6. The method for connecting difficult-to-join pipes to be used at a high temperature according to claim 1, wherein the seal means comprises solid phase/liquid phase diffusion joining.

7. The method for connecting difficult-to-join pipes to be used at a high temperature according to claim 1, wherein the seal means comprises pulse electric sintering.

8. The method for connecting difficult-to-join pipes to be used at a high temperature according to claim 1, wherein the seal means comprises a metallic O ring/gasket.

9. The method for connecting difficult-to-join pipes to be used at a high temperature according to claim 1, wherein a portion of the pipes in the jointed pipe portion are subjected to thickness increasing processing.

10. A structure for connecting difficult-to-join pipes to be used at a high temperature, comprising:
pipes to be used at a high temperature composed of materials which are difficult to weld, the pipes being formed with an external or internal thread on the end portions thereof; and
seal means for sealing the inner and outer faces, or only the inner face, or only the outer face of the thread-jointed pipe portion,
whereby mechanical strength of joint of the pipes is ensured by mutually joining the pipes to be used at a high temperature composed of materials which are difficult to weld by means of the screw structure, and gas tightness of the jointed pipe portion is ensured by sealing inner and outer faces, or only the inner face, or only the outer face of the jointed pipe portion with the seal means.

11. The structure for connecting difficult-to-join pipes to be used at a high temperature according to claim 10, wherein the thread comprises a taper thread.

12. The structure for connecting difficult-to-join pipes to be used at a high temperature according to claim 10, wherein the materials which are difficult to weld comprise iron-based alloys reinforced with dispersed rare earth oxide particles.

13. The structure for connecting difficult-to-join pipes to be used at a high temperature according to claim 10, wherein the seal means comprises seal welding.

14. The structure for connecting difficult-to-join pipes to be used at a high temperature according to claim 10, wherein the seal means comprises soldering.

15. The structure for connecting difficult-to-join pipes to be used at a high temperature according to claim 10, wherein the seal means comprises solid phase/liquid phase diffusion joining.

16. The structure for connecting difficult-to-join pipes to be used at a high temperature according to claim 10, wherein the seal means comprises pulse electric sintering.

17. The structure for connecting difficult-to-join pipes to be used at a high temperature according to claim 10, wherein the seal means comprises a metallic O ring/gasket.

18. The structure for connecting difficult-to-join pipes to be used at a high temperature according to claim 10, wherein a portion of the pipes in the jointed pipe portion are subjected to thickness increasing processing.

## Amended claims

### Amended claims under Art. 19.1 PCT

**1.** (Amended) A method for connecting difficult-to-join pipes to be used at a high temperature, comprising:
forming a pair of pipes to be used at a high temperature and made of materials which are difficult to weld, one of the pair of pipes being made of an alloy reinforced with dispersed rare earth oxide particles;
forming one end portion of one of said pair of pipes to be thicker than another portions of the pipes;
internally taper-threading one end portion of said pair of pipes, externally taper-threading another end portion of said pair of pipes, and thread-jointing said pair of pipes to each other; and
sealing inner and outer faces, or only the inner face, or only the outer face of the thread-jointed pipe portion with seal means,
whereby mechanical strength of the jointed pipe portion is ensured by forming pipes to be used at a high temperature, composed of materials which are difficult to weld with a mutually screw structure, and gas tightness of the jointed pipe portion is ensured by sealing the inner and outer faces, or only the inner face, or only the outer face of the jointed pipe portion with the seal means.

**2.** (Amended) The method for connecting difficult-to-join pipes to be used at a high temperature according to claim 1, wherein said alloy reinforced with dispersed rare earth oxide particles comprises an iron-based alloys reinforced with dispersed rare earth oxide particles.

**3.** (Amended) The method for connecting difficult-to-join pipes to be used at a high temperature according to claim 1, wherein another one of said pair of pipes made of the materials which are difficult to weld is made of Fe-Cr-Ni heat-resistant alloy.

**4.** The method for connecting difficult-to-join pipes to be used at a high temperature according to claim 1, wherein the seal means comprises seal welding.

**5.** The method for connecting difficult-to-join pipes to be used at a high temperature according to claim 1, wherein the seal means comprises soldering.

**6.** The method for connecting difficult-to-join pipes to be used at a high temperature according to claim 1, wherein the seal means comprises solid phase/liquid phase diffusion joining.

**7.** The method for connecting difficult-to-join pipes to be used at a high temperature according to claim 1, wherein the seal means comprises pulse electric sintering.

**8.** The method for connecting difficult-to-join pipes to be used at a high temperature according to claim 1, wherein the seal means comprises a metallic O ring/gasket.

**9.** (Deleted)

**10.** (Amended) A structure for connecting difficult-to-join pipes to be used at a high temperature, comprising:
a pair of pipes to be used at a high temperature and made of materials which are difficult to weld, one of the pair of pipes being made of an alloy reinforced with dispersed rare earth oxide particles, one end portion of one of said pair of pipes being thicker than another portions of the pipes, one end portion of said pair of pipes being internally taper-threaded, another end portion of said pair of pipes being externally taper-threaded, and said pair of pipes being thread-jointed to each; and
seal means for sealing inner and outer faces, or only the inner face, or only the outer face of the thread-jointed pipe portion,
whereby mechanical strength of the jointed pipe portion is ensured by forming pipes to be used at a high temperature, composed of materials which are difficult to weld with a mutually screw structure, and gas tightness of the jointed pipe portion is ensured by sealing the inner and outer faces, or only the inner face, or only the outer face of the jointed pipe portion with the seal means.

**11.** (Amended) The structure for connecting difficult-to-join pipes to be used at a high temperature according to claim 1, wherein said alloy reinforced with dispersed rare earth oxide particles comprises an iron-based alloys reinforced with dispersed rare earth oxide particles.

**12.** (Amended) The structure for connecting difficult-to-join pipes to be used at a high temperature according to claim 10, wherein another one of said pair of pipes made of the materials which are difficult to weld is made of Fe-Cr-Ni heat-resistant alloy.

**13.** The structure for connecting difficult-to-join pipes to be used at a high temperature according to claim 10, wherein the seal means comprises seal welding.

**14.** The structure for connecting difficult-to-join pipes to be used at a high temperature according to claim 10, wherein the seal means comprises soldering.

**15.** The structure for connecting difficult-to-join pipes to be used at a high temperature according to claim 10, wherein the seal means comprises solid phase/liquid phase diffusion joining.

**16.** The structure for connecting difficult-to-join pipes to be used at a high temperature according to claim 10, wherein the seal means comprises pulse electric sintering.

**17.** The structure for connecting difficult-to-join pipes to be used at a high temperature according to claim 1, wherein the seal means comprises a metallic O ring/gasket.

**18.** (Deleted)
